# EUROPÄISCHE PATENTSCHRIFT

(11) **EP 1 570 706 B1**
(45) Veröffentlichungstag und Bekanntmachung des Hinweises auf die Patenterteilung: **05.05.2010**
(21) Anmeldenummer: 03785508.7
(22) Anmeldetag: 13.11.2003
(51) Int. Cl.: H04R 7/04, H04M 1/03, H04M 1/02

(54) **SLIDER-MOBILTELEFON MIT BIEGEWELLENLAUTSPRECHER**
SLIDER MOBILE TELEPHONE COMPRISING A BENDING WAVE LOUDSPEAKER
TELEPHONE MOBILE A PARTIES COULISSANTES ET HAUT-PARLEUR A ONDE DE FLEXION

(30) Priorität: 12.12.2002 DE 10258183
(43) Veröffentlichungstag der Anmeldung: 07.09.2005
(73) Patentinhaber: Palm, Inc., Sunnyvale, CA 94085-2801 (US)
(72) Erfinder: HÜLSKEMPER, Michael, 46569 Hünxe (DE)
(74) Vertreter: Samson & Partner
(86) Internationale Anmeldenummer: PCT/DE2003/003775
(87) Internationale Veröffentlichungsnummer: WO 2004/054317

(56) Entgegenhaltungen:
- EP-A- 1 150 476
- WO-A-00/69212
- WO-A-02/21881

## Beschreibung

Die Erfindung bezieht sich auf ein Mobiltelefon, bei dem ein erster und ein zweiter Gehäuseteil vorgesehen sind, die derart gegeneinander verschieblich sind, dass durch das Verschieben Abschnitte der Gehäuseteile freigelegt werden.

Ein solches Mobiltelefon wird allgemein als sog. "Slider"-Mobiltelefon bezeichnet, wobei der erste und der zweite Gehäuseteil in Längsrichtung des Mobiltelefons gegeneinander verschoben werden können. Bei diesem Verschieben wird eine Tastatur freigelegt, die einem Benutzer des Mobiltelefons dessen Bedienung gestattet. Die Tastatur befindet sich üblicher Weise auf dem in bezug auf den Benutzer hinteren Gehäuseteil des Mobiltelefons. Der vordere Gehäuseteil des Mobiltelefons besitzt eine feste Rückwand, die, abgesehen vom mechanischen Schutz des Inneren des vorderen Gehäuseteils, ohne weitere Funktion ist.

Des weiteren sind im Stand der Technik seit kurzem Mobiltelefone bekannt, die mit einem Biegewellenlautsprecher ausgestattet sind. Dabei ist beispielsweise ein Schutzfenster über einer Anzeigeeinrichtung des Mobiltelefons als Biegewellenlautsprecher ausgeführt und wird mittels eines Piezo-Betätigungselements zu Biegeschwingungen angeregt. Da das Schutzfenster neben seiner Funktion als Biegewellenlautsprecher auch mechanische Schutzfunktionen in bezug auf das Innere des Mobiltelefons zu übernehmen hat und transparent sein muss, ist die Materialauswahl für das Schutzfenster beschränkt und kann insbesondere nicht für die Funktion des Schutzfensters als Biegewellenlautsprecher optimiert werden.

Ausgehend hiervon liegt der Erfindung die Aufgabe zugrunde, bei einem Mobiltelefon der eingangs genannten Art verbesserten Schallwiedergabeeigenschaften zu schaffen.

Diese Aufgabe wird bei dem oben genannten Mobiltelefon durch die kennzeichnenden Merkmale des Anspruchs 1 gelöst, wonach einer der freigelegten Abschnitte wenigstens teilweise als Biegewellenlautsprecher mit einem plattenförmigen Element zur Abstrahlung von Schallsignalen und einem Betätigungselement zur Anregung von Biegewellen im plattenförmigen Element ausgebildet ist.

Verbesserte Schallwiedergabeeigenschaften des Mobiltelefons ergeben sich zum einen daraus, dass es mit einem Biegewellenlautsprecher ausgestattet ist, was bisher im Stand der Technik für die hier in Rede stehenden Slider-Mobiltelefone noch nicht der Fall ist. Von wesentlicher Bedeutung ist zudem, dass für die Verwirklichung des Biegewellenlautsprechers ein freigelegter Abschnitt des Mobiltelefons benutzt wird, denn bei einem solchen Abschnitt liegen grundsätzlich eher geringe Anforderungen im Hinblick auf einen mechanischen Schutz des Inneren des zugeordneten Gehäuseteils des Mobiltelefons vor. Insofern ergeben sich für den den Biegewellenlautsprecher bildenden Flächenabschnitt eines Gehäuseteils im Vergleich zum Stand der Technik erheblich mehr Freiheitsgrade hinsichtlich der Materialauswahl.

Grundsätzlich kann der Biegewellenlautsprecher von einem Flächenabschnitt aus demselben Material gebildet werden wie das Material der Gehäuseteile. Es ist jedoch bevorzugt, dass das plattenförmige Element in dem freigelegten Abschnitt zur Anregung mit Biegeschwingungen optimiert ist. Unabhängig von der Materialwahl ist das plattenförmige Element flexibel an dem zugehörigen Gehäuseteil zu befestigen, so dass eine Anregung mit Biegeschwingungen ermöglicht wird. Bei dem Mobiltelefon kann jedoch aufgrund der getroffenen Anordnung des plattenförmigen Elements des Biegewellenlautsprechers sowohl hinsichtlich seiner Form als auch seines Materials eine optimale Auswahl getroffen werden.

In dem durch das Verschieben freigelegten Abschnitt des ersten Gehäuseteils kann eine Tastatur des Mobiltelefons angeordnet sein, während in dem freigelegten Abschnitt des zweiten Gehäuseteils das plattenförmige Element des Biegewellenlautsprechers angeordnet sein kann. Da für einen einfachen Zugriff auf die Tastatur ein Benutzer das Mobiltelefon derart halten wird, dass die Tastatur ihm zugewandt ist, ergibt sich, dass der freigelegte Abschnitt des zweiten Gehäuseteils, der das plattenförmige Element des Biegewellenlautsprechers umfasst, von dem Benutzer abgewandt ist. Dies hat den Vorteil, dass auch eine Schallabstrahlung mittels des Biegewellenlautsprechers von dem Benutzer des Mobiltelefons weg erfolgt, so dass gerade bei Benutzung einer Freisprechfunktion des Mobiltelefons, insbesondere bei einem Übergang von normaler Schallwiedergabe zu einer Freisprechwiedergabe, plötzliche Schallintensitätszuwächse nicht unmittelbar auf den Benutzer wirken. Die Gefahr von Schädigungen des Gehörs des Benutzers aufgrund eines solchen Übergangs wird somit wirksam vermieden.

Zwischen dem plattenförmigen Element im Bereich des freigelegten Abschnitts des zweiten Gehäuseteils und dem Inneren dieses Gehäuseteils kann eine Trennwand vorgesehen sein, sofern ein erhöhter mechanischer Schutz oder eine erhöhte Staubdichtigkeit gewünscht ist.

Ein mechanischer Schutz des Inneren des zweiten Gehäuseteils wird dann erreicht, wenn die Trennwand im Inneren des zweiten Gehäuseteils, d. h. einwärts von dem plattenförmigen Element, derart angeordnet ist, dass das plattenförmige Element einerseits die erforderlichen Durchbiegungen für die Biegeschwingungen ausführen, andererseits aber gegen mechanische Beanspruchung befindliche Bauelemente im Inneren des zweiten Gehäuseteils nicht berühren kann.

Die Erfindung wird nachfolgend anhand der Zeichnungen beispielshalber noch näher erläutert. Es zeigen:
- Figur 1: eine schematische Seitenansicht eines Slider-Mobiltelefons und
- Figur 2: eine Schnittansicht eines Gehäuseteils des Slider-Mobiltelefons nach Figur 1.

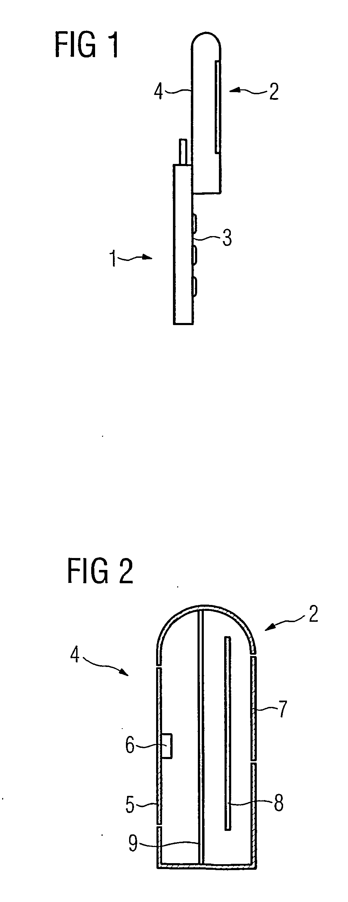

Das in Figur 1 dargestellte Slider-Mobiltelfefon weist einen ersten Gehäuseteil 1 und einen zweiten Gehäuseteil 2 auf, die gegeneinander verschieblich sind, und zwar in Längsrichtung des Mobiltelefons.

Der erste Gehäuseteil 1 ist in Figur 1 gegenüber dem zweiten Gehäuseteil 2 derart verschoben, dass der erste Gehäuseteil 1 einen freigelegten Abschnitt 3 zeigt, in dessen Bereich eine Tastatur des Mobiltelefons angeordnet ist.

Der zweite Gehäuseteil 2 weist ebenfalls einen freigelegten Abschnitt 4 auf, in dessen Bereich ein Biegewellenlautsprecher untergebracht ist, der von einem plattenförmigen Element 5 und einem Piezo-Betätigungselement 6 gebildet wird, das das plattenförmige Element 5 zu Biegeschwingungen anregt, so dass der Biegewellenlautsprecher Schallsignale abstrahlt.

An einer äußeren Seite des zweiten Gehäuseteils 2 ist ein Anzeigefenster 7 vorgesehen, das dem Biegewellenlautsprecher gegenüber liegt.

Aufgrund der vorgesehenen Anordnung des plattenförmigen Elements 5 des Biegewellenlautsprechers erfolgt dessen Schallabstrahlung von einem Benutzer des Mobiltelefons weg.

Aus der Figur 2 ist ersichtlich, dass der hier dargestellte zweite Gehäuseteil 2 in seinem Inneren ein Schaltkreisplatine 8 aufweist, die gegen mechanische Beschädigung zu schützen ist. Aus diesem Grund ist zwischen dem plattenförmigen Element und der Schaltkreisplatine 8 eine Trennwand 9 angeordnet, die über eine ausreichende mechanische Stabilität verfügt und an einer Innenwand des zweiten Gehäuseteils 2 befestigt ist. Die Anordnung der Trennwand 9 ist so gewählt, dass das plattenförmige Element 5 die zur Schallabstrahlung über einen gewünschten Frequenzbereich vorzunehmenden Biegeschwingungen ausführen kann.

## Patentansprüche

1. Mobiltelefon, bei dem ein erster (1) und ein zweiter Gehäuseteil (2) vorgesehen sind, die derart gegeneinander verschieblich sind, dass durch das Verschieben Abschnitte (3, 4) der Gehäuseteile (1, 2) freigelegt werden,
**dadurch gekennzeichnet,**
**dass** einer der freigelegten Abschnitte (4) wenigstens teilweise als Biegewellenlautsprecher mit einem plattenförmigen Element (5) zur Abstrahlung von Schallsignalen und einem Betätigungselement zur Anregung von Biegewellen in dem plattenförmigen Element (5) ausgebildet ist.

2. Mobiltelefon nach Anspruch 1,
**dadurch gekennzeichnet,**
**dass** ein Material für das plattenförmige Element (5) zur Anregung mit Biegeschwingungen optimiert ist.

3. Mobiltelefon nach einem der Ansprüche 1 oder 2,
**dadurch gekennzeichnet,**
**dass** in dem durch das Verschieben freigelegten Abschnitt (3) des ersten Gehäuseteils (1) eine Tastatur des Mobiltelefons und in dem freigelegten Abschnitt (4) des zweiten Gehäuseteils (2) das plattenförmige Element (5) des Biegewellenlautsprechers angeordnet ist.

4. Mobiltelefon nach einem der Ansprüche 1 bis 3,
**dadurch gekennzeichnet,**
**dass** zwischen dem plattenförmigen Element (5) im Bereich des freigelegten Abschnitts (4) des zweiten Gehäuseteils (2) und dem Inneren dieses Gehäuseteils (2) eine Trennwand (9) vorgesehen ist.

5. Mobiltelefon nach Anspruch 4,
**dadurch gekennzeichnet,**
**dass** die Trennwand (9) zum mechanischen Schutz des Inneren des zweiten Gehäuseteils (2) vor Durchbiegungen des plattenförmigen Elements (5) ausgebildet ist.

6. Mobiltelefon nach einem der Ansprüche 1 bis 5,
**dadurch gekennzeichnet,**
**dass** der dem Biegewellenlautsprecher zugeordnete freigelegte Abschnitt (4) auf einer Rückseite des Mobiltelefons angeordnet ist, wenn der erste (1) und der zweite Gehäuseteil (2) gegeneinander verschoben sind.

## Claims

1. A mobile telephone in which a first (1) and a second case part (2) is provided, which are shiftable against each other, such that sections (3, 4) of the case parts (1, 2) are exposed by the shifting,
**characterised in that**
one of the exposed sections (4) is at least partly adapted as a bending wave loudspeaker with a plate-type member (5) for the radiation of sound signals and an actuating member for the excitation of bending waves in the plate-type member (5).

2. The mobile telephone according to claim 1,
**characterised in that**
a material for the plate-type member (5) is optimised for the excitation with bending oscillations.

3. The mobile telephone according to one of the claims 1 or 2,
**characterised in that**
a keyboard of the mobile telephone is arranged in the section (3) exposed by the shifting of the first case part (1) and the plate-type member (5) of the bending wave loudspeaker is arranged in the exposed section (4) of the second case part (2).

4. The mobile telephone according to one of the claims 1 to 3,
**characterised in that**
a partition wall (9) is provided between the plate-type member (5) in the area of the exposed section (4) of the second case part (2) and the interior of this case part (2).

5. The mobile telephone according to claim 4,
**characterised in that**
the partition wall (9) is adapted for the mechanical protection of the interior of the second case part (2) against deflections of the plate-type member (5).

6. The mobile telephone according to any one of the claims 1 to 5,
**characterised in that**
the exposed section associated with the bending wave loudspeaker is arranged on the back side of the mobile telephone, when the first (1) and the second case part (2) are shifted against each other.

## Revendications

1. Téléphone portable dans lequel une première (1) et une deuxième (2) partie de boîtier sont prévues qui sont tellement coulissables l'une contre l'autre que des sections (3, 4) des parties de boîtiers (1, 2) sont exposées par le coulissement,
**caractérisé en ce qu'**une des sections exposées (4) est au moins partiellement adaptée en tant que haut-parleur à ondes de flexion avec un élément du type plaque (5) pour la radiation de signaux de son et un élément d'actionnement pour l'excitation d'ondes de flexion dans l'élément du type plaque (5).

2. Téléphone portable selon la revendication 1,
**caractérisé en ce qu'**un matériau pour l'élément du type plaque (5) est optimisé pour l'excitation avec des oscillations de flexion.

3. Téléphone portable selon l'une des revendications 1 ou 2,
**caractérisé en ce qu'**un clavier du téléphone portable est agencé dans la section (3) exposée par le coulissement de la première partie de boîtier (1) et l'élément du type plaque (5) du haut-parleur à ondes de flexion est agencé dans la section exposée (4) de la deuxième partie de boîtier (2).

4. Téléphone portable selon l'une des revendications 1 à 3,
**caractérisé en ce qu'**une paroi de partition (9) est prévue entre l'élément du type plaque (5) dans la région de la section exposée (4) de la deuxième partie de boîtier (2) et l'intérieur de cette partie de boîtier (2).

5. Téléphone portable selon l'une des revendications 1 à 5,
**caractérisé en ce que** la paroi de partition (9) est agencée pour la protection mécanique de l'intérieur de la deuxième partie de boîtier (2) contre des déflections de l'élément du type plaque (5).

6. Téléphone portable selon l'une des revendications 1 à 5,
**caractérisé en ce que** la section exposée (4) associée avec le haut-parleur à onde de flexion est agencée sur la face arrière du téléphone portable quand la première (1) et la deuxième partie de boîtier (2) sont coulissées l'une contre l'autre.
